# FASCICULE DE BREVET EUROPEEN

(11) **EP 0 883 063 B1**
(45) Date de publication et mention de la délivrance du brevet: **22.12.1999**
(21) Numéro de dépôt: 98470012.0
(22) Date de dépôt: 26.05.1998
(51) Int. Cl.: G06F 11/00

(54) **Procédé d'identification d'un circuit intégré et dispositif associé**
Verfahren zum Identifizieren eines integrierten Schaltkreises und eine damit zusammenhängende Vorrichtung
Method for identifying an integrated circuit and associated device

(30) Priorité: 04.06.1997 FR 9707078
(43) Date de publication de la demande: 09.12.1998
(73) Titulaire: STMicroelectronics S.A., 94250 Gentilly (FR)
(72) Inventeur: Burgard, Francine, Cabinet BALLOT SCHMIT, 57000 Metz (FR)
(74) Mandataire: Ballot, Paul Denis Jacques

(56) Documents cités:
- EP-A- 0 578 410
- US-A- 5 619 724

## Description

L'invention concerne un procédé d'identification d'un circuit intégré et un dispositif associé. Plus particulièrement, l'invention concerne un grand nombre de circuits intégrés utilisés dans des périphériques de micro-processeurs, ou dans des interfaces d'ordinateurs.

Les systèmes programmés vérifient le plus souvent leurs périphériques et interfaces lors du démarrage du système et/ou lors de chaque utilisation du périphérique ou de l'interface. Une des phases de la vérification consiste à identifier le périphérique (ou l'interface) et à vérifier son intégrité, c'est à dire sa bonne constitution. Pour cela, le système programmé lit des numéros d'identification du (ou des) circuit(s) intégré(s) constituant l'interface, le numéro d'identification pouvant être constitué du numéro constructeur du composant et/ou d'un identifiant de version du composant. Les programmes d'identification contenus dans les pilotes d'interfaces (driver) lisent les numéros d'identification des circuits intégrés et les comparent à une liste de composants possibles.

Les fabricants de circuits intégrés modifient régulièrement leurs circuits afin de les rendre plus performants. Suivant les circuits intégrés, l'apparition d'une nouvelle version se fait tous les six mois à trois ans. D'une manière générale (mais non absolue) une nouvelle version d'un circuit intégré est en générale compatible avec la précédente. De plus, la miniaturisation des circuits permet d'intégrer de plus en plus de fonction sur un même circuit. Aussi, un nouveau circuit peut très bien remplacer plusieurs circuits. A titre d'exemple, un circuit d'interfaçage pour un port série de communication supportant deux ou trois protocoles peut être remplacé par un circuit d'interfaçage qui utilise plusieurs protocoles dont les protocoles désirés. Cela permet au fabricant, de fabriquer un unique circuit polyvalent à la place d'une pluralité de circuits moins performants. La production du composant polyvalant étant automatiquement plus importante que la production de chacun des circuits précédents, le prix du composant reste inchangé tout en permettant au fabricant de mieux répondre aux besoins du marché, de réduire ses coûts de fabrication, et de fournir un composant plus performant.

Un problème survient lors de l'identification des circuits dans un système programmé car les nouveaux composants ne sont pas identifiés comme correspondant à l'un des composants possibles. Classiquement, on effectue une mise à jour des programmes pour rajouter de nouveaux numéros d'identification. Bien que la remise à jour des programmes ne soit pas un travail très difficile, sa mise en pratique pose des problèmes de délais et d'immobilisation imprévue de matériel suite à une opération de maintenance ou à un échange "standard" de certains composants.

Le document US-A- 5 619 724 divulgue un système a microprocesseur qui alloue un identificateur unique à chaque composant dudit système.

L'invention propose un procédé d'identification qui remédie à ces problèmes de mise à jour par logiciel. L'invention remet en cause toute la procédure d'identification des circuits afin d'assurer une mise à jour incorporée dans chaque circuit. Le logiciel va d'abord écrire dans le circuit intégré le numéro d'identification souhaité puis va ensuite lire le numéro constructeur et éventuellement l'identificateur de version du circuit afin de vérifier la compatibilité.

Ainsi, l'invention a pour objet un procédé d'identification d'un circuit intégré, ledit circuit intégré comportant un numéro d'identification stocké de manière indélébile, ledit procédé comportant les étapes suivantes:
- écriture dans un registre volatil d'un numéro souhaité correspondant à l'identification d'un circuit souhaité;
- décodage dans le circuit intégré du numéro souhaité et fourniture d'une information représentative de la compatibilité du circuit intégré avec le circuit souhaité;
- fourniture, lors d'une lecture du numéro d'identification, du numéro d'identification si le circuit intégré n'est pas compatible avec le circuit souhaité ou du numéro souhaité si le circuit intégré est compatible avec le circuit souhaité.

L'invention a également pour objet un circuit intégré comportant un dispositif d'identification comportant un registre non-volatil qui mémorise un numéro d'identification dudit circuit intégré, un registre volatil pour mémoriser un numéro souhaité correspondant à l'identification d'un circuit souhaité, des moyens de décodage pour fournir une information représentative de la compatibilité entre le circuit intégré et le circuit souhaité, un multiplexeur pour aiguiller, lors d'une lecture, soit le numéro souhaité soit le numéro d'identification du circuit intégré en fonction de ladite information.

L'invention propose deux modes de réalisation préférentiels. Un premier mode peu encombrant utilise un comparateur. Un deuxième mode plus performant utilise une mémoire non-volatile.

Afin de garder une compatibilité avec les anciens programmes, l'invention prévoit que le numéro d'identification est mémorisé dans le registre volatil lors d'une remise à zéro du circuit intégré. Pour cela, le dispositif d'identification comporte des moyens de préchargement pour pouvoir écrire le contenu du registre non-volatil dans le registre volatil en réponse à un signal de remise à zéro.

L'invention sera mieux comprise et d'autres particularités et avantages apparaîtront à la lecture de la description qui va suivre, faite en référence aux dessins annexés parmi lesquels:
la figure 1 représente un premier mode de réalisation de l'invention, et
la figure 2 représente un deuxième mode de réalisation de l'invention.

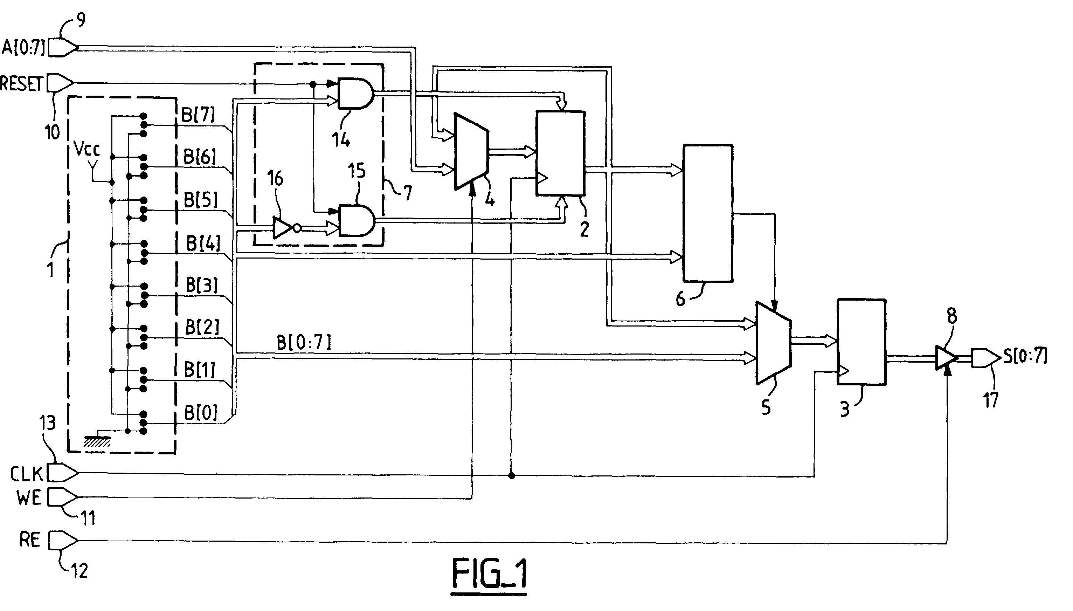

Le schéma de la figure 1 représente un circuit d'identification utilisable pour des circuits intégrés toujours compatible avec le circuit intégré précédent. Le circuit de la figure 1 comporte:
- un registre non-volatil 1 destiné à contenir et à fournir un identifiant de version d'une série de composant par exemple codé sur huit bits B[0:7], ce registre non-volatil peut être réalisé comme indiqué sur le schéma par des fils de liaison qui relient chaque sortie du registre non-volatil soit à la tension d'alimentation soit à la masse (il est également possible d'utiliser des cellules ROM, PROM, EPROM, EEPROM);
- un premier registre 2 volatil disposant d'une entrée de donnée de huit bits, d'une entrée parallèle de forçage asynchrone à "un" qui comporte huit bits, d'une entrée parallèle de forçage asynchrone à "zéro" qui comporte huit bits, d'une entrée d'horloge, et d'une sortie de huit bits;
- un deuxième registre 3 volatil disposant d'une entrée de donnée de huit bits, d'une entrée d'horloge, et d'une sortie de huit bits;
- un multiplexeur de verrouillage 4 et un multiplexeur de choix 5 disposant chacun de deux entrées parallèles de huit bits, d'une entrée de sélection, et d'une sortie de huit bits;
- un comparateur 6 disposant d'une première et d'une deuxième entrées parallèles de huit bits chacune, et une sortie qui fournit un signal binaire dans un premier état si le mot présent sur la première entrée est supérieur au mot présent sur la deuxième entrée ou dans un deuxième état si le mot présent sur la première entrée n'est pas supérieur au mot présent sur la deuxième entrée;
- un circuit de forçage 7 disposant d'une entrée de mot, d'une entrée de consigne, d'une sortie de mot de forçage à "un", et d'une sortie de mot de forçage à "zéro";
- un buffer 8 à sortie trois état disposant d'une entrée de mot, d'une entrée de commande, et d'une sortie de mot;
- une borne d'entrée de mot 9 recevant le mot A[0:7];
- des première à troisième bornes d'entrée de commande 10 à 12 recevant respectivement des signaux de remise à zéro RESET, d'écriture WE, et de lecture RE;
- une borne d'entrée d'horloge 13 recevant le signal d'horloge CLK; et
- une borne de sortie 17 de mot fournissant le mot S[0:7].

Dans notre exemple, le circuit de forçage comporte des première et deuxième séries de porte ET 14 et 15 à deux entrées, et une série d'inverseur 16, chaque série étant composée dans notre exemple de huit portes en parallèle. Une première des entrées de chacune des portes ET des première et deuxième séries de porte 14 et 15 est connectée à la première borne d'entrée de commande 10 afin de recevoir le signal RESET. Chacune des deuxièmes entrées de porte ET de la première série de porte 14 est respectivement connectée à l'une des sorties du registre non-volatil 1 afin de recevoir le mot B[0:7]. Chacune des entrées des inverseurs de la série d'inverseur 16 est respectivement connectée à l'une des sorties du registre non-volatil 1 afin de recevoir le mot B[0:7]. Chacune des deuxièmes entrées de porte ET de la deuxième série 15 est respectivement connectée à l'une des sorties de la série d'inverseur 16. Les sorties de la première série de porte ET 14 forment la sortie de mot de forçage à "un" du circuit de forçage 7. Les sorties de la deuxième série de porte ET 15 forment la sortie de mot de forçage à "zéro" du circuit de forçage 7.

La première des entrées du multiplexeur de verrouillage 4 est connectée à la borne d'entrée de mot 9 afin de recevoir le mot A[0:7]. La deuxième des entrées du multiplexeur de verrouillage 4 est connectée à la sortie du premier registre 2. L'entrée de sélection du multiplexeur de verrouillage 4 est connectée à la deuxième borne d'entrée de commande afin de recevoir le signal WE. Lorsque le signal WE est dans un premier état, par exemple à "un", la sortie du multiplexeur de verrouillage 4 est relié à sa première entrée. Lorsque le signal WE est dans un deuxième état, par exemple à "zéro", la sortie du multiplexeur de verrouillage 4 est relié à sa deuxième entrée.

L'entrée de donnée du premier registre 2 est connecté à la sortie du multiplexeur de verrouillage 4. L'entrée de forçage à "un" du premier registre 2 est connectée à la sortie de mot de forçage à "un" du circuit de forçage 7. L'entrée de forçage à "zéro" du premier registre 2 est connectée à la sortie de mot de forçage à "zéro" du circuit de forçage 7. L'entrée d'horloge du premier registre 2 est connectée à la borne d'entrée d'horloge 13 afin de recevoir le signal CLK.

La première des entrées du comparateur 6 est connectée à la sortie du premier registre 2. La deuxième entrée du comparateur 6 est connectée à la sortie du registre non-volatile 1 afin de recevoir le mot B[0:7].

La première entrée du multiplexeur de choix 5 est connectée à la sortie du registre non-volatil 1. La deuxième entrée du multiplexeur de choix 5 est connectée à la sortie du premier registre 2. L'entrée de sélection du multiplexeur de choix 5 est connectée à la sortie du comparateur 6. Lorsque le signal présent sur la sortie du comparateur 6 est dans le premier état, par exemple à "un", alors la sortie du multiplexeur de choix 5 est reliée à sa première entrée. Lorsque le signal présent sur la sortie du comparateur 6 est dans le deuxième état, par exemple à "zéro", alors la sortie du multiplexeur de choix 5 est reliée à sa deuxième entrée.

L'entrée de donnée du deuxième registre 3 est connectée à la sortie du multiplexeur de choix 5. L'entrée d'horloge du deuxième registre 3 est connectée à la borne d'entrée d'horloge 13.

L'entrée de mot du buffer 8 est connectée à la sortie du deuxième registre 3. L'entrée de commande du buffer 8 est connectée à la troisième borne de commande 12 afin de recevoir le signal RE. La sortie du buffer 8 est connectée à la borne de sortie 17.

Pour expliquer le fonctionnement normal du circuit de cette figure 1, on considère que les signaux sont actifs lorsqu'ils sont à "un" et inactif lorsqu'ils sont à "zéro". On considère que les signaux de commande RESET, WE, RE sont dans un état inactif lors de la mise sous tension du dispositif.

Peu après la mise sous tension, le circuit intégré va effectuer différentes remises à zéro. Parmi les remises à zéro à effectuer, il peut être prévu de remettre à zéro le dispositif de la figure 1. Pour effectuer cette remise à zéro, on active le signal RESET. Lorsque ledit signal RESET est activée, les sorties des première et deuxième séries de porte ET 14 et 15 vont respectivement fournir B[0:7] et le complément de B[0:7]. Le premier registre 2 va être forcé de manière asynchrone pour contenir le mot B[0:7] et le fournir à sa sortie. Le signal d'écriture WE étant inactif, le multiplexeur de verrouillage 4 fournit sur sa sortie B[0:7]. Lorsque le signal RESET devient inactif, le mot B[0:7] est ré-enregistré à chaque front actif de l'horloge CLK. Le comparateur 6 compare donc B[0:7] avec B[0:7] de sorte que le multiplexeur de choix 5 fournit à sa sortie B[0:7] qui est mémorisé à chaque cycle d'horloge dans le deuxième registre 3. Le signal de lecture RE étant inactif, la sortie du buffer 8 est dans un état de haute impédance.

Si l'on utilise un système programmé de l'art antérieur, le système va effectuer une lecture simple du numéro d'identification du circuit intégré. La lecture se traduit au niveau du circuit par l'activation du signal de lecture RE qui va permettre de fournir le mot B[0:7] en sortie.

Si par contre le circuit intégré est disposé dans un système programmé adapté à l'invention, le système va d'abord effectuer une écriture du numéro souhaité. L'écriture se traduit par la présence d'un mot souhaité A[0:7] sur la borne d'entrée de mot 9 et l'activation du signal d'écriture WE pendant une durée qui englobe au moins un premier front actif du signal d'horloge CLK. Le signal WE étant actif, la sortie du multiplexeur de verrouillage fournit à sa sortie le mot A[0:7] qui est enregistré dans le premier registre 2 dès le premier front actif de l'horloge CLK. Le comparateur 6 va fournir un signal de sortie actif si A[0:7] > B[0:7] ou inactif dans le cas contraire. Lors d'un deuxième cycle d'horloge le deuxième registre 3 va mémoriser B[0:7] si le signal de sortie du comparateur 6 est actif ou A[0:7] si le signal de sortie du comparateur 6 est inactif. Le système peut après le deuxième cycle d'horloge effectuer une lecture du numéro d'identification et il sera fournit en sortie du deuxième registre 3 soit A[0:7] si le circuit correspond à une version de ayant un numéro identifiant supérieur (donc plus récente) soit B[0:7] si le circuit correspond à une version plus ancienne que la version souhaité.

L'homme du métier peut remarquer que l'identification contrôlée par le circuit de la figure 1 se limite au numéro identifiant une version d'un circuit intégré. De plus, il est nécessaire pour qu'un tel circuit fonctionne que la version la plus récente d'un circuit soit compatible avec toutes les versions précédentes.

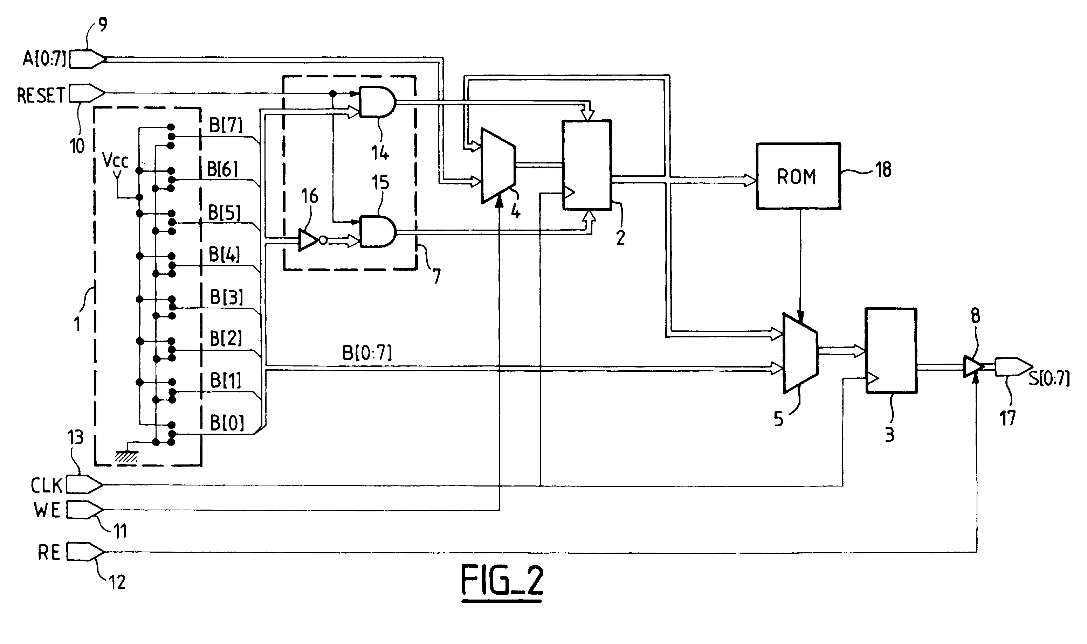

Le schéma de la figure 2 est une variante un peu plus encombrante du circuit de la figure 1 mais qui permet d'assurer un bon fonctionnement sans nécessiter d'avoir une compatibilité ascendante complète avec des circuits d'une même famille. Le circuit de la figure 2 permet de vérifier la compatibilité également entre des circuits intégrés appartenant à des familles différentes.

Le circuit de la figure 2 diffère du circuit de la figure 1 par la suppression du comparateur 6 et des connexions audit comparateur et par l'ajout d'une mémoire non-volatile 18, par exemple de type ROM.

La mémoire 18 est représentée de manière simplifiée et dispose d'une entrée d'adresse, par exemple sur huit bits, et d'une sortie de donnée, par exemple de un bit. L'entrée d'adresse de la mémoire 18 est connectée à la sortie du premier registre 2. La sortie de donnée de la mémoire 18 est connectée à l'entrée de sélection du multiplexeur de choix 5. Afin de réduire le temps d'accès du circuit de la figure 2, la mémoire 18 peut fonctionner de manière asynchrone, autrement dit, le premier registre 2 est utilisé comme registre d'adresse de la mémoire 18.

La mémoire 18 doit contenir dans chaque élément de mémorisation un bit qui indique si le circuit intégré contenant le circuit de la figure 2 est compatible avec un autre circuit intégré dont le numéro d'identification correspond à l'adresse dudit élément de mémorisation. Plus généralement, l'information placée à une adresse correspondant au numéro souhaité doit être représentative de la compatibilité entre le circuit souhaité et le circuit intégré.

Ainsi, avec un système programmé adapté à l'invention, le système va d'abord effectuer une écriture du numéro souhaité A[0:7] dans le premier registre 2 dès le premier front actif de l'horloge CLK. La mémoire va décoder l'adresse correspondant à A[0:7] et fournir au bout d'un temps de propagation inférieur à un cycle de l'horloge CLK, soit un signal actif si le circuit intégré n'est pas compatible, soit un signal inactif si le circuit intégré est compatible. Lors d'un deuxième cycle d'horloge le deuxième registre 3 va mémoriser B[0:7] si le circuit intégré n'est pas compatible ou A[0:7] si le circuit intégré est compatible. Le système peut après le deuxième cycle d'horloge effectuer une lecture du numéro d'identification et il sera fournit comme mot S[0:7] soit A[0:7] si le circuit intégré correspond à une version compatible soit B[0:7] si le circuit correspond à une version non compatible.

Bien sûr l'homme du métier comprendra que l'invention ne se limite pas aux modes de réalisation décrits. De nombreuses modifications peuvent être effectuées sans pour autant s'éloigner du cadre de l'invention. Ainsi tout les signaux identifiés comme étant actif ou inactif, à "zéro" ou à "un" peuvent être modifiés. De même, l'homme du métier comprendra que l'utilisation de mots d'identification de huit bits peut être changée. En effet, les numéros identifiant une version de circuit intégré peuvent être codés sur huit bits, mais les numéros d'identification constructeur sont codés sur plusieurs octets dans la pratique.

Le registre non-volatil 1 qui utilise des éléments de mémorisation de type à fils de liaison peut être réalisé avec des éléments de mémorisation de mémoire ROM, PROM, EPROM, EEPROM. La mémoire 18 peut également être de type programmable ou reprogrammable afin d'assurer une compatibilité avec des circuits conçus postérieurement sans avoir à refaire de nouveaux masques.

Il est également possible de remplacer le comparateur 6 ou la mémoire 18 par d'autres moyens de décodage tels que des circuits de logique combinatoire qui pourraient dans certains cas être de taille plus réduite que la mémoire 18 tout en assurant plus de possibilités de compatibilité que le comparateur 6.

Certains éléments ne sont pas absolument nécessaire à la réalisation de l'invention. Ainsi, le multiplexeur de verrouillage 4 sert à synchroniser le chargement de A[0:7] dans le premier registre 2. Le multiplexeur de verrouillage peut être supprimé si l'on utilise un registre avec une entrée de validation ou si l'on utilise le signal d'écriture comme signal d'horloge du premier registre.

Le deuxième registre 3 sert à mémoriser soit le numéro d'identification soit le numéro souhaité en fonction de l'information. ce deuxième registre sert à stabiliser les signaux de sortie afin d'éviter d'éventuels parasites (glitch) qui risquent de nuire au bon fonctionnement du circuit intégré. Cependant, si le circuit intégré est prévu pour supporter ces parasites, il est tout à fait possible de supprimer le deuxième registre 3.

Le buffer 8 n'a d'utilité que si la sortie du dispositif est connectée à un bus multi-utilisateurs et peut être supprimé si on utilise un bus dédié.

Le circuit de forçage 7 constitue des moyens de préchargement pour pouvoir écrire le contenu du registre non-volatil 1 dans le premier registre volatil 2 en réponse au signal de remise à zéro RESET. Ces moyens de préchargement n'ont pour utilité que d'assurer la compatibilité avec des systèmes programmés selon l'art antérieur qui effectuent seulement une lecture du numéro d'identification. Il va de soit que l'on peut supprimer ces moyens de préchargement si le circuit intégré est destiné à n'être utilisé que dans des systèmes utilisant le procédé d'identification de l'invention.

## Revendications

1. Procédé d'identification d'un circuit intégré, ledit circuit intégré comportant un numéro d'identification (B[0:7]) stocké de manière indélébile, caractérisé en ce qu'il comporte les étapes suivantes:
- écriture dans un registre volatil (2) d'un numéro souhaité(A[0:7]) correspondant à l'identification d'un circuit souhaité;
- décodage dans le circuit intégré du numéro souhaité et fourniture d'une information représentative de la compatibilité du circuit intégré avec le circuit souhaité;
- fourniture, lors d'une lecture du numéro d'identification, du numéro d'identification (B[0:7]) si le circuit intégré n'est pas compatible avec le circuit souhaité ou du numéro souhaité (A[0:7]) si le circuit intégré est compatible avec le circuit souhaité.

2. Procédé selon la revendication 1, caractérisé en ce que le décodage s'effectue par comparaison du numéro souhaité et du numéro d'identification.

3. Procédé selon la revendication 1, caractérisé en ce que le décodage s'effectue par la lecture dans une mémoire (18) de type non-volatile, l'information placée à une adresse correspondant au numéro souhaité étant représentative de la compatibilité entre le circuit souhaité et le circuit intégré.

4. Procédé selon l'une des revendications 1 à 3, caractérisé en ce que le numéro d'identification est mémorisé dans le registre volatil (2) lors d'une remise à zéro du circuit intégré.

5. Circuit intégré comportant un dispositif d'identification comportant un registre non-volatil (1) qui mémorise un numéro d'identification (B[0:7]) dudit circuit intégré, caractérisé en ce que le dispositif d'identification comporte en outre un registre volatil (2) pour mémoriser un numéro souhaité (A[0:7]) correspondant à l'identification d'un circuit souhaité, des moyens de décodage (6, 18) pour fournir une information représentative de la compatibilité entre le circuit intégré et le circuit souhaité, un multiplexeur (5) pour aiguiller, lors d'une lecture, soit le numéro souhaité (A[0:7]) soit le numéro d'identification (B[0:7]) du circuit intégré en fonction de ladite information.

6. Circuit selon la revendication 5, caractérisé en ce que les moyens de décodage comporte un comparateur (6) recevant sur une première entrée le numéro d'identification (B[0:7]) provenant du registre non-volatil (1) et sur une deuxième entrée le numéro souhaité (A[0:7]) provenant du registre volatil (2) et fournit ladite information sur sa sortie en fonction du résultat de la comparaison entre le numéro d'identification (B[0:7]) et le numéro souhaité (A[0:7]).

7. Circuit selon la revendication 5, caractérisé en ce que les moyens de décodage comporte une mémoire non-volatile (18) recevant sur son bus d'adresse le numéro souhaité (A[0:7]) provenant du registre volatil (2), ladite mémoire (18) comportant des données représentatives des différentes compatibilités possibles du circuit intégré afin de fournir l'information sur une sortie.

8. Circuit selon l'une des revendications 5 à 7, caractérisé en ce que le dispositif d'identification comporte des moyens de préchargement (7) pour pouvoir écrire le contenu du registre non-volatil (1) dans le registre volatil (2) en réponse à un signal de remise à zéro (RESET).

9. Circuit selon l'une des revendications 5 à 8, caractérisé en ce que le dispositif d'identification comporte un registre de mémorisation (3) pour mémoriser soit le numéro d'identification (B[0:7]) soit le numéro souhaité (A[0:7]) en fonction de ladite information.

## Patentansprüche

1. Verfahren zum Identifizieren eines integrierten Schaltkreises, wobei der integrierte Schaltkreis eine Identifizierungsziffer (B[0:7]) aufweist, die unauslöschlich abgespeichert ist, dadurch gekennzeichnet, daß es die folgenden Schritte umfaßt:
Schreiben einer gewünschten Ziffer (A[0:7]) in ein flüchtiges Register (2), die zur Identifizierung eines gewünschten Schaltkreises dient,
Decodieren der gewünschten Ziffer in dem integrierten Schaltkreis und Ausgeben einer Information, die die Kompatibilität des integrierten Schaltkreises mit dem gewünschten Schaltkreis anzeigt,
Ausgeben der Identifizierungsziffer, wenn der integrierte Schaltkreis nicht mit dem gewünschten Schaltkreis kompatibel ist, oder der gewünschten Ziffer (A[0:7]), wenn der integrierte Schaltkreis mit dem gewünschten Schaltkreis kompatibel ist, beim Lesen der Identifizierungsziffer (B[0:7]).

2. Verfahren nach Anspruch 1, dadurch gekennzeichnet, daß das Dekodieren durch Vergleichen der gewünschten Ziffer mit der Identifizierungsziffer erfolgt.

3. Verfahren nach Anspruch 1, dadurch gekennzeichnet, daß das Dekodieren durch das Lesen in einem Speicher (18) vom nicht-flüchtigen Typ erfolgt, wobei die Information unter einer Adresse, die der gewünschten Ziffer entspricht, die Kompatibilität von gewünschtem Schaltkreis und integriertem Schaltkreis anzeigt.

4. Verfahren nach einem der Ansprüche 1 bis 3, dadurch gekennzeichnet, daß die Identifizierungsziffer in dem flüchtigen Register (2) beim Zurücksetzen des integrierten Schaltkreises auf Null abgespeichert wird.

5. Integrierter Schaltkreis mit einer Identifizierungsvorrichtung mit einem nicht-flüchtigen Register (1) zum Abspeichern einer Identifizierungsziffer (B[0:7]) des integrierten Schaltkreises, dadurch gekennzeichnet, daß die Identifizierungsvorrichtung außerdem ein flüchtiges Register (2) zum Abspeichern einer gewünschten Ziffer (A[0:7]), die zu einer Identifizierung eines gewünschten Schaltkreises dient, Einrichtungen zum Dekodieren (6, 18) zum Ausgeben einer Information, die die Kompatibilität von dem integrierten Schaltkreis und von dem gewünschten Schaltkreis anzeigt, und einen Multiplexer (5) zum Weiterleiten entweder der gewünschten Ziffer (A[0:7]) oder der Identifizierungsziffer (B[0:7]) des integrierten Schaltkreises beim Lesen in Abhängigkeit von der Information umfaßt.

6. Schaltkreis nach Anspruch 5, dadurch gekennzeichnet, daß die Einrichtungen zum Dekodieren einen Komparator (6) umfassen, der über einen ersten Eingang die Identifizierungsziffer (B[0:7]) aus dem nicht-flüchtigen Register (1) und über einen zweiten Eingang die gewünschte Ziffer (A[0:7]) aus dem flüchtigen Register (2) empfängt und die Information über seinen Ausgang in Abhängigkeit von dem Ergebnis des Vergleichens von der Identifizierungsziffer (B[0:7]) und der gewünschten Ziffer (A[0:7]) ausgibt.

7. Schaltkreis nach Anspruch 5, dadurch gekennzeichnet, daß die Einrichtungen zum Dekodieren einen nicht-flüchtigen Speicher (18) umfassen, der über seinen Adreßbus die gewünschte Ziffer (A[0:7]) aus dem flüchtigen Register (2) empfängt, wobei der Speicher (18) Daten umfaßt, die die umterschiedlichen möglichen Kompatibilitäten der integrierten Schaltkreises wiedergeben, um die Information über einen Ausgang auszugeben.

8. Schaltkreis nach einem der Ansprüche 5 bis 7, dadurch gekennzeichnet, daß die Identifizierungsvorrichtung Einrichtungen zum Vorladen (7) zum Ermöglichen des Schreibens des Inhalts des nicht-flüchtigen Registers (1) in das flüchtige Register (2) in Abhängigkeit von einem Reset-Signal (RESET) umfaßt.

9. Schaltkreis nach einem der Ansprüche 5 bis 8, dadurch gekennzeichnet, daß die Identifizierungsvorrichtung ein Speicherregister (3) zum Abspeichern entweder der Identifizierungsziffer (B[0:7]) oder der gewünschten Ziffer (A[0:7]) in Abhängigkeit von der Information umfaßt.

## Claims

1. A procedure for identification of an integrated circuit, the said integrated circuit including an identification number (B[0:7]) stored indelibly, characterised in that it includes the following steps:
- writing into a volatile memory (2) a desired number (A[0:7]) corresponding to the identification of a desired circuit;
- decoding the desired number in the integrated circuit and supplying an item of information representing compatibility of the integrated circuit with the desired circuit;
- during a reading of the identification number, supplying the identification number (B[0:7]) if the integrated circuit is not compatible with the desired circuit, or the desired number (A[0:7]) if the integrated circuit is compatible with the desired circuit.

2. A procedure according to Claim 1, characterised in that the decoding operation is performed by comparing the desired number with the identification number.

3. A procedure according to Claim 1, characterised in that the decoding operation is performed by reading in a memory (18) of a non-volatile type an item of information placed at an address corresponding with the desired number, being representative of the compatibility between the desired circuit and the integrated circuit.

4. A procedure according to one of Claims 1 to 3,
characterised in that the identification number is memorised in the volatile register (2) during an operation of zeroing the integrated circuit.

5. An integrated circuit including an identification device having a non-volatile register (1) which memorises an identification number (B[0:7]) of the said integrated circuit, characterised in that the identification device further includes a volatile register (2) for memorising a desired number (A[0:7]) corresponding to the identification of a desired circuit, decoding means (6, 18) for supplying an item of information representative of the compatibility between the integrated circuit and the desired circuit, and a multiplexer (5) for switching, during a reading operation, either the desired number (A[0:7]) or the identification number (B[0:7]) of the integrated circuit as a function of the said item of information.

6. A circuit according to Claim 5, characterised in that the decoding means comprises a comparator (6) for receiving on a first input the identification number (B[0:7] derived from the non-volatile register (1), and on a second input the desired number (A[0:7]) derived from the volatile register (2), and for supplying the said item of information at its output as a function of the result of the comparison between the identification number (B[0:7]) and the desired number (A[0:7]).

7. A circuit according to Claim 5, characterised in that the decoding means comprise a non-volatile memory (18) receiving on its address bus the desired number (A[0:7]) derived from the volatile register (2), the said memory (18) including data representative of the various possible compatibilities of the integrated circuit, whereby to supply the item of information on an output.

8. A circuit according to one of Claims 5 to 7,
characterised in that the identification device comprises preloading means (7) for enabling the contents of the non-volatile register (1) to be written into the volatile register (2) in response to a signal (RESET) for reversion to zero.

9. A circuit according to one of Claims 5 to 8,
characterised in that the identification device comprises a memory register (3) for memorising either the identification number (B[0:7]) or the desired number (A[0:7]) as a function of the said item of information.
